# EUROPÄISCHE PATENTSCHRIFT

(11) **EP 4 728 221 B1**
(45) Veröffentlichungstag und Bekanntmachung des Hinweises auf die Patenterteilung: **21.10.2026**
(21) Anmeldenummer: 25706784.3
(22) Anmeldetag: 20.02.2025
(51) Int. Cl.: F21V 5/00, F21V 5/04, F21V 7/00, G02B 19/00, F21W 131/202, F21W 131/205, F21Y 113/10, F21Y 115/10

(54) **MEDIZINISCHE LEUCHTE**
MEDICAL LIGHT
LAMPE MÉDICALE

(30) Priorität: 15.03.2024 EP 24163789
(43) Veröffentlichungstag der Anmeldung: 22.04.2026
(73) Patentinhaber: KaVo Dental GmbH, 88400 Biberach an der Riss (DE)
(72) Erfinder: HACKEL, André, 88400 Biberach (DE); ZAENGEL, Fabian, 89257 Illertissen (DE); KULLMANN, Barbara, 81245 München (DE)
(74) Vertreter: Thun, Clemens
(86) Internationale Anmeldenummer: PCT/EP2025/054542
(87) Internationale Veröffentlichungsnummer: WO 2025/190626

(56) Entgegenhaltungen:
- WO-A1-2023/052321
- CN-A- 110 645 545
- US-A1- 2007 147 041

## Beschreibung

Die vorliegende Erfindung betrifft eine medizinische Leuchte, bevorzugt eine zahnärztliche Behandlungsleuchte, mit deren Hilfe das intraorale Ausleuchten eines Operationsfelds erfolgt. Insbesondere betrifft die vorliegende Erfindung eine Leuchte, wie sie aus der WO 2023/052321 A1 der Anmelderin bekannt ist.

Um die Qualität von medizinischen Behandlungen zu gewährleisten, ist es unerlässlich, dass die Untersuchungs- oder Behandlungsstelle hinreichend ausgeleuchtet wird. Medizinische Behandlungsleuchten sind dementsprechend dazu ausgebildet, die zu untersuchende oder zu behandelnde Stelle mit einem optimierten Lichtfeld zu beleuchten, welches die Untersuchung und/oder Behandlung unterstützt, wobei die Eigenschaften dieses Lichtfelds durch unterschiedliche Normen festgelegt sind. Eine hiervon ist die EN ISO 9680, welche bspw. vorsieht, dass der Farbwiedergabeindex (CRI, Color Rendering Index) größer als 85 ist, eine Mindestbeleuchtungsstärke von 15.000 Lux vorliegt und das Lichtfeld eine Farbtemperatur zwischen 3.600 und 6.400 Kelvin aufweist. Darüber hinaus ist zur Vermeidung von Irritationen oder sogar Augenschäden des Patienten vorgesehen, dass das Lichtfeld in Randbereichen hinreichend stark abfällt, sodass in der Objektebene ein streng begrenzter Raum um die Behandlungsstelle beleuchtet wird.

Eine Leuchte, welche die oben genannten Anforderungen optimal erfüllt, ist aus der bereits erwähnten WO 2023/052321 A1 bekannt. Diese Leuchte zeichnet sich dadurch aus, dass sie eine einzelne Beleuchtungseinheit mit einer im Wesentlichen punktförmigen LED-Lichtquelle aufweist, deren Licht mit Hilfe optischer Mittel in besonderer Weise beeinflusst wird, um eine homogene und gleichmäßige Ausleuchtung des Lichtfelds zu erzielen. Diese optischen Mittel bestehen aus einem Kollimator sowie einer Abdeckscheibe, wobei beide Komponenten in besonderer Weise mit lichtlenkenden Strukturen versehen sind, die auf die punktförmige Lichtquelle abgestimmt sind, um bei einer kompakten Bauweise der Beleuchtungseinheit trotz allem eine optimierte Ausleuchtung des Lichtfelds zu ermöglichen. Insgesamt wird hierdurch die Montage der Leuchte aufgrund des einfacheren Aufbaus im Vergleich zu aus dem Stand der Technik bekannten Lösungen vereinfacht und es ist sichergestellt, dass eine exakte Anordnung und Ausrichtung des optischen Systems in Bezug auf die LED-Lichtquelle erzielt werden kann.

Dies wiederum führt dazu, dass der Kollimator und die Abdeckscheibe das Licht der LED-Lichtquelle tatsächlich in der erforderlichen Weise beeinflussen, um das Lichtfeld mit hoher Qualität beleuchten zu können.

Ausgehend von diesem Stand der Technik liegt der vorliegenden Erfindung die Aufgabenstellung zugrunde, die bekannte Leuchte dahingehend weiterzuentwickeln, dass diese vielseitig genutzt werden kann.

Die Aufgabe wird durch eine Leuchte, welche die Merkmale des Anspruchs 1 aufweist, gelöst. Vorteilhafte Weiterbildungen der Erfindung sind Gegenstand der abhängigen Ansprüche.

Auch die erfindungsgemäße Leuchte weist ebenso wie die Leuchte aus dem Stand der Technik eine Beleuchtungseinheit mit einer ersten LED-Lichtquelle sowie mit einem optischen System bestehend aus einem Kollimator und einer Abdeckscheibe auf, wobei das von der ersten LED-Lichtquelle abgegebene Licht durch den Kollimator und die Abdeckscheibe derart gezielt beeinflusst wird, dass in einer Objektebene ein hochqualitativ ausgeleuchtetes Lichtfeld erzielt wird. Zusätzlich ist nunmehr erfindungsgemäß vorgesehen, dass die Leuchtmittel mindestens eine zweite LED-Lichtquelle umfassen, deren Licht ebenfalls durch den Kollimator und die Abdeckscheibe abgestrahlt wird. Diese zweite LED-Lichtquelle ist nun allerdings so positioniert, dass die Beeinflussung durch den Kollimator und die Abdeckscheibe derart ist, dass dieses Licht in einen Winkelbereich abgestrahlt wird, der größer ist als der Winkelbereich, unter welcher die erste Lichtquelle das Lichtfeld erzeugt. Idealerweise wird das von der zweiten LED-Lichtquelle emittierte Licht überwiegend unkontrolliert über den Kollimator und die Abdeckscheibe abgegeben, sodass eine im Wesentlichen diffuse Lichtabgabe in einen sehr großen Winkelbereich erfolgt. Diese ergänzende Lichtabgabe kann dann unterschiedliche, insbesondere neuartige Aufgabenstellungen erfüllen. Bspw. kann alternativ zur Erzeugung des Lichtfelds eine großräumige homogene Lichtabgabe erfolgen, die von dem Patienten und/oder auch von dem Arzt als angenehm empfunden wird, sodass bspw. in Behandlungs- oder Untersuchungspausen ein der Erholung des Patienten fördernder Effekt erzielt wird. Auch die Verwendung als Statuslicht, mit dessen Hilfe bspw. ein Betriebszustand der zahnärztlichen Behandlungseinheit oder einer vergleichbaren Komponente angezeigt wird, wäre denkbar. So könnte z.B. mit Hilfe der weiteren LED-Lichtquelle in bestimmten Situationen ein farbig blinkendes Licht abgegeben werden, um einen Fehler oder eine vergleichbare Situation zu signalisieren.

Gemäß der vorliegenden Erfindung wird also eine medizinische Leuchte, insbesondere eine zahnärztliche Behandlungsleuchte für das intraorale Ausleuchten eines Operationsfelds vorgeschlagen, welche aufweist:
zumindest eine Beleuchtungseinheit mit Leuchtmitteln und optischen Mitteln zur Erzeugung eines Lichtfelds in einer Objektebene,
- wobei die Leuchtmittel eine erste, im Wesentlichen punktförmige LED-Lichtquelle und die optischen Mittel einen plattenförmigen Kollimator sowie eine Abdeckscheibe aufweisen,
- wobei der Kollimator einen zentralen Bereich, der auf einer den Leuchtmitteln abgewandten Seite mit lichtbrechenden Strukturen versehen ist, sowie einen den zentralen Bereich umgebenden äußeren Bereich aufweist, der auf einer den Leuchtmitteln zugewandten Seite mit zur Totalreflexion ausgebildeten Strukturen versehen ist,
- wobei die Abdeckscheibe mit einer Linsenstruktur versehen ist, welche eine Vielzahl von Einzellinsen aufweist, die dazu ausgebildet sind, das von dem Kollimator abgegebene und in die Linsen eintretende Licht der ersten LED-Lichtquelle jeweils auf die Objektebene zur Erzeugung des Lichtfelds zu projizieren,
- und wobei erfindungsgemäß die Leuchtmittel zumindest eine zweite LED-Lichtquelle umfassen, die derart positioniert ist, dass das von der mindestens einen zweiten LED-Lichtquelle stammende Licht über den Kollimator und die Abdeckscheibe in einen Winkelbereich abgestrahlt wird, der größer ist als der Winkelbereich, unter welchem die erste Lichtquelle das Lichtfeld erzeugt.

Die erfindungsgemäße Weiterbildung der bereits bekannten Leuchte besteht also darin, dass zusätzlich zu der eigentlichen, für die Erzeugung des Lichtfelds vorgesehen primären LED-Lichtquelle eine zweite Lichtquelle vorgesehen ist, die getrennt oder unabhängig von der ersten LED-Lichtquelle betrieben werden kann und zum Erzielen neuartiger Beleuchtungsfunktionen genutzt wird. Während die erste LED-Lichtquelle allerdings nach wie vor in Bezug auf das optische System an einer bestimmten Position angeordnet ist, die derart gewählt ist, dass das von der Primär-Lichtquelle abgegebene Licht in gewünschter Weise gezielt durch das optische System beeinflusst wird, um das Lichtfeld zu erzeugen, wird die zusätzliche zweite LED-Lichtquelle bewusst versetzt zu dieser optimierten Position angeordnet, sodass das optische System zwar weiterhin zur Abgabe auch des von der zweiten LED-Lichtquelle abgegebenen Lichts genutzt wird, dieses Licht allerdings mehr oder weniger unkontrolliert beeinflusst, um die angestrebte eher diffuse Lichtabgabe in einen großen Raumwinkelbereich erzielen zu können.

Wie bereits erwähnt wird also vorzugsweise durch das optische System ein Zentrum definiert, in dem die erste LED-Lichtquelle positioniert ist, wobei die mindestens eine zweite LED-Lichtquelle außerhalb des optischen Zentrums angeordnet ist. Insbesondere kann hierbei vorgesehen sein, dass die mindestens eine zweite LED-Lichtquelle derart versetzt axial zur ersten LED-Lichtquelle positioniert ist, dass das abgestrahlte Licht unter einem Winkel auf den äußeren Bereich des Kollimators trifft, sodass im Wesentlichen keine Totalreflexion an den ausgebildeten Strukturen auftreten. Dabei ist besonders bevorzugt vorgesehen, dass die mindestens eine zweite LED-Lichtquelle um ca. 10 mm - 40 mm versetzt zu der ersten LED-Lichtquelle angeordnet ist.

Vorzugsweise weist die zweite LED-Lichtquelle mehrere LEDs oder LED-Cluster auf, die verteilt, insbesondere gleichmäßig verteilt um die erste LED-Lichtquelle angeordnet sind. Dabei kann insbesondere vorgesehen sein, dass die erste LED-Lichtquelle und die mindestens eine zweite LED-Lichtquelle in einer gemeinsamen Ebene angeordnet sind, vorzugsweise auf einem gemeinsamen Trägerelement angeordnet sind, wobei insbesondere der Abstand der Ebene, in der die LED-Lichtquellen angeordnet sind, zur Ebene des Kollimators etwa 40 - 60 mm beträgt. Um den Effekt der möglichst gleichmäßigen und homogenen Abgabe des Lichts der zweiten LED-Lichtquelle zusätzlich zu unterstützen, kann ferner vorgesehen sein, dass dieser zweiten LED-Lichtquelle ein Diffusor zugeordnet ist, der das Licht beeinflusst, bevor es in den Kollimator eintritt.

Vorzugsweise ist vorgesehen, dass die mindestens eine zweite LED-Lichtquelle dazu ausgebildet ist, Licht mit einer von der ersten LED-Lichtquelle abweichenden Farbe oder Farbtemperatur abzugeben, wobei vorzugsweise die Farbe oder Farbtemperatur des von der mindestens einen zweiten LED-Lichtquelle abgegebenen Lichts veränderbar ist. Besonders bevorzugt kann die zweite LED-Lichtquelle unabhängig von der ersten LED-Lichtquelle betrieben werden.

Weitere in den abhängigen Ansprüchen beschriebene Maßnahmen tragen dazu bei, die Erzeugung des Lichtfelds, welches mit Hilfe der ersten LED-Lichtquelle erzielt wird, zu optimieren. Dabei ist gemäß einer ersten vorteilhaften Weiterbildung vorgesehen, dass die den LED-Leuchtmitteln zugewandte Rückseite des zentralen Bereichs des Kollimators mit Teilflächen versehen ist, welche in Bezug zu einer Ebene des Kollimators und damit zur Objektebene eine Neigung aufweisen, um das Lichtfeld in einer Richtung asymmetrisch aufzuweiten. Diese Maßnahme führt dazu, dass der Helligkeitsgradient des Lichtfelds im Randbereich in optimierter Weise beeinflusst wird. Insbesondere kann hierbei erzielt werden, dass der Helligkeitsgradient am oberen und unteren Rand des Lichtfelds in positiver Weise beeinflusst wird, wobei im unteren Bereich der Helligkeitsabfall im Randbereich schwächer ausgeprägt ist und dementsprechend weniger starke Helligkeitskontraste auftreten als im gegenüberliegenden oberen Randbereich. Auf diese Weise wird eine unerwünschte Blendung eines Patienten im oberen Randbereich des Lichtfelds vermieden, da hier eine scharfe Abgrenzung des beleuchteten Bereichs gegenüber der Umgebung vorliegt. Gleichzeitig werden im gegenüberliegenden unteren Randbereich allzu starke Kontraste vermieden, wodurch Ermüdungserscheinungen für einen Beobachter, bspw. für den behandelnden Arzt reduziert werden.

Die soeben angesprochene, vorteilhafte asymmetrische Aufweitung des Lichtfelds wird also dadurch erhalten, dass die der LED-Lichtquelle zugewandte Rückseite des zentralen Bereichs des Kollimators mit Teilflächen versehen ist, welche im Vergleich zu der Ebene des Kollimators und damit zur Objektebene eine Neigung aufweisen.

Hierbei kann vorgesehen sein, dass zumindest einige der Teilflächen, vorzugsweise alle, jeweils um eine Achse gekippt sind, welche in der Ebene des Kollimators liegt und im Wesentlichen senkrecht zur Richtung der asymmetrischen Aufweitung steht. Eine alternative oder ergänzende Möglichkeit, um die asymmetrische Aufweitung des Lichtfelds zu erzielen, kann ferner darin bestehen, dass zumindest einige der die Linsenstruktur bildenden Linsen bezüglich der Ebene des Kollimators um eine Achse gekippt sind, welche im Wesentlichen senkrecht zur Richtung der asymmetrischen Aufweitung ausgerichtet ist.

Vorzugsweise ist vorgesehen, dass die Teilflächen durch streifenförmige Flächenbereiche gebildet sind, welche sich jeweils im Wesentlichen senkrecht zur Richtung der asymmetrischen Aufweitung entlang ihrer jeweiligen Kippachse erstrecken. Dabei kann ferner vorgesehen sein, dass die streifenförmigen Flächenbereiche bezüglich der Richtung der asymmetrischen Aufweitung konkav gewölbt sind, wobei die streifenförmigen Flächenbereiche besonders bevorzugt jeweils bezüglich einer Ebene, welche senkrecht zur Ebene des Kollimators steht und durch eine parallel zur Richtung der asymmetrischen Aufweitung verlaufende Achse aufgespannt wird, symmetrisch ausgebildet sind. Diese Maßnahme führt dazu, dass in der Breite gesehen eine gewisse, nunmehr allerdings symmetrische Aufweitung des Lichtfeldes erzielt wird.

Alternativ zu den streifenförmigen Teilflächen wäre auch denkbar, dass die Teilflächen kachelförmige Teilflächen sind, welche die der LED-Lichtquelle zugewandte Rückseite des zentralen Bereichs des Kollimators matrixartig bedecken. Dabei kann dann analog zu der oben erwähnten konkaven Ausgestaltung der kachelförmigen Teilflächen vorgesehen sein, dass zumindest einige der kachelförmigen Teilflächen bezüglich der Ebene des Kollimators um eine Achse, welche parallel zur Richtung der asymmetrischen Aufweitung verläuft, gekippt sind, wobei insbesondere die Mehrzahl der kachelförmigen Teilflächen bezüglich einer Ebene, welche senkrecht zur Ebene des Kollimators steht und durch eine parallel zur Richtung der asymmetrischen Aufweitung verlaufende Achse aufgespannt wird, symmetrisch angeordnet sind. Wiederum führt diese Maßnahme dazu, dass in der Breite gesehen eine gewisse Aufweitung des Lichtfeldes erzielt wird.

Die lichtbrechenden Strukturen des zentralen Bereichs des Kollimators bilden vorzugsweise eine sog. Fresnel-Struktur. Ferner ist vorzugsweise vorgesehen, dass die zur Totalreflexion ausgebildeten Strukturen des Kollimators eine den LED-Leuchtmitteln zugewandte weitere Fresnel-Struktur bilden, welche in einer Projektion senkrecht zur Ebene des Kollimators den zentralen Bereich ringartig umgibt. Diese Ausgestaltung der Strukturen des Kollimators ermöglicht es, diesen im Prinzip scheibenartig auszugestalten und trotz allem in effizienter Weise das Licht der ersten LED-Lichtquelle zu beeinflussen. Hierdurch wird eine kompakte Bauweise der gesamten Beleuchtungseinheit ermöglicht, die durch die erfindungsgemäße Verwendung der mindestens einen zweiten LED-Lichtquelle nicht oder kaum vergrößert wird. Die lichtbrechenden Strukturen des zentralen Bereichs und die zur Totalreflexion ausgebildeten Strukturen des äußeren Bereichs des Kollimators können hierbei vorzugsweise eine gemeinsame Rotationssymmetrie aufweisen. Vorzugsweise ist ferner vorgesehen, dass diese Strukturen asphärische Flächenbereiche bilden.

Die Linsen der erfindungsgemäß ebenfalls verwendeten Abdeckscheibe sind vorzugsweise auf einer den LED-Leuchtmitteln zugewandten Seite der Abdeckscheibe angeordnet. Insbesondere kann für den Fall, dass die Abdeckscheibe eine Außenfläche der Leuchte bildet, vorgesehen sein, dass die den LED- Leuchtmitteln abgewandte Seite der Abdeckscheibe glatt ausgeführt ist. Dies verhindert insbesondere ein Ansetzen von Schmutzpartikeln an der Oberfläche der Leuchte und erleichtert somit deren Reinigung.

Analog zum Kollimator kann auch die Linsenstruktur der Abdeckscheibe einen inneren Bereich sowie einen äußeren Bereich aufweisen, wobei
- Linsen des inneren Bereichs dazu ausgebildet sind, das von dem zentralen Bereich des Kollimators abgegebene Licht der ersten LED-Lichtquelle in Form eines zentralen Lichtfelds auf die Objektebene zu projizieren,
- Linsen des äußeren Bereichs dazu ausgebildet sind, das von dem äußeren Bereich des Kollimators abgegebene Licht der ersten LED-Lichtquelle in Form eines äußeren Lichtfelds auf die Objektebene zu projizieren,
und wobei sich zentrales Lichtfeld und äußeres Lichtfeld vorzugsweise im Wesentlichen vollständig überlagern. Insbesondere kann hierbei vorgesehen sein, dass jede Einzellinse des inneren oder äußeren Bereichs jeweils vollständig das entsprechende zentrale bzw. äußere Lichtfeld projiziert. Diese Maßnahme führt wiederum dazu, dass für den Fall, dass ein Teil des über die Abdeckscheibe der Leuchte abgegebenen Lichts abgeschattet wird, beispielsweise durch einen Arm oder den Kopf des behandelnden Arztes, trotz allem eine vollständige und nach wie vor im Wesentlichen homogene Ausleuchtung des gewünschten Bereichs erzielt wird.

Die Linsen des inneren Bereichs können hierbei im Wesentlichen quadratisch sein, während hingegen die Linsen des äußeren Bereichs in Richtung einer Achse des Kollimators, welche senkrecht zur Richtung der asymmetrischen Aufweitung verläuft, eine größere Erstreckung aufweisen als in einer parallel zur Richtung der asymmetrischen Aufweitung verlaufenden Achse.

Letztendlich wird also mit Hilfe der vorliegenden Erfindung eine Leuchte zur Verfügung gestellt, welche eine optimierte Beleuchtung eines Behandlungsbereichs ermöglicht, wobei zusätzliche Möglichkeiten zur Abgabe von Licht zum Erfüllen weiterer Beleuchtungsaufgaben bestehen.

Nachfolgend soll die Erfindung anhand der beiliegenden Zeichnung näher erläutert werden. Es zeigen:
- Figur 1: eine perspektivische Ansicht einer medizinischen Leuchte, bei der die erfindungsgemäße ausgestaltete Beleuchtungseinheit zum Einsatz kommt;
- Figur 2: schematisch das mit Hilfe der erfindungsgemäßen Leuchte erzielbare Lichtfeld;
- Figur 3: eine Darstellung der verschiedenen Komponenten der Beleuchtungseinheit gemäß einem ersten Ausführungsbeispiel;
- Figur 4: eine vergrößerte Ansicht eines Teilbereichs des Kollimators von Figur 3;
- Figur 5: eine nochmals vergrößerte weitere Darstellung eines Teilbereichs des Kollimators;
- Figur 6: die von den LED-Leuchtmitteln abgewandte Vorderseite des Kollimators;
- Figur 7: die den LED-Leuchtmitteln zugewandte Rückseite des Kollimators;
- Figur 8: eine Darstellung der verschiedenen Komponenten der Beleuchtungseinheit gemäß einem zweiten Ausführungsbeispiel;
- Figur 9: eine vergrößerte Ansicht eines Teilbereichs des Kollimators von Figur 8;
- Figuren 10 und 11: weitere Schnittdarstellungen des Kollimators gemäß dem zweiten Ausführungsbeispiel;
- Figur 12: die von der LED-Lichtquelle abgewandte Vorderseite des Kollimators gemäß dem zweiten Ausführungsbeispiel;
- Figur 13: die den LED-Leuchtmitteln zugewandte Rückseite des Kollimators gemäß dem zweiten Ausführungsbeispiel;

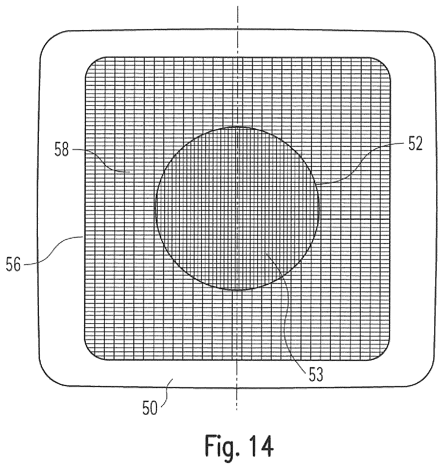

- Figur 14: eine Ansicht der mit der Linsenstruktur versehenen Abdeckscheibe; und
- Figur 15: eine Darstellung zur Verdeutlichung der Beeinflussung des von den verschiedenen Lichtquellen stammenden Lichts durch das optische System.

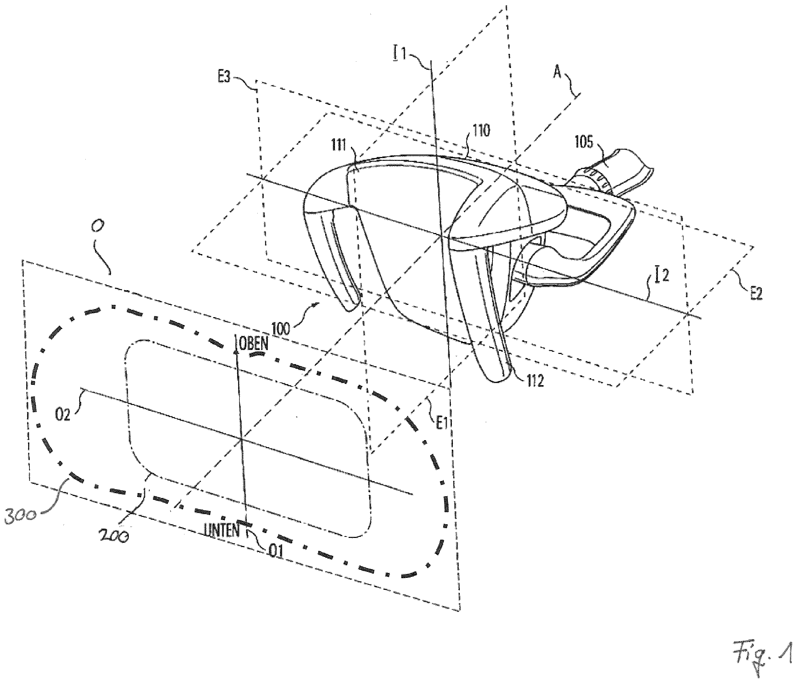

Figur 1 zeigt in perspektivischer Ansicht eine allgemein mit dem Bezugszeichen 100 versehene medizinische Leuchte, insbesondere eine zahnärztliche Behandlungsleuchte, mit deren Hilfe insbesondere das Operationsfeld eines zahnmedizinischen Arbeitsplatzes ausgeleuchtet werden soll. Die Leuchte 100 ist hierbei mit der nachfolgend im Detail beschriebenen Beleuchtungseinheit ausgestattet, wobei allerdings die äußere Form der Leuchte selbstverständlich auch anderweitig gestaltet sein könnte. Die Darstellung in Figur 1 dient in erster Linie dazu, die Ebenen und Richtungen, auf die bei der späteren Erläuterung der optischen Komponenten der erfindungsgemäßen Beleuchtungseinheit verwiesen wird, zu veranschaulichen.

Grundsätzlich weist die Leuchte 100 einen Leuchtenkopf 110 auf, der an einem nicht näher dargestellten Gelenkarm 105 verstellbar angeordnet ist, derart, dass er in gewünschter Weise auf den Operationsbereich ausgerichtet werden kann. Das Gehäuse 111 des Leuchtenkopfs 110 weist hierbei zu dessen Verstellbarkeit zwei seitliche Griffe 112 auf, durch die ein manuelles Ausrichten der Leuchte 100 ermöglicht ist.

In der Darstellung gemäß Figur 1 wird davon ausgegangen, dass die Ausrichtung des Leuchtenkopfs 110 derart ist, dass Licht im Wesentlichen horizontal entlang einer Achse A, die der Hauptachse des optischen Systems der Leuchte 100 entspricht, auf einen vor der Leuchte 100 befindlichen Bereich gerichtet wird. In dieser Darstellung ist die in Figur 1 gezeigte Ebene E2 horizontal ausgerichtet, senkrecht hierzu und durch die Hauptachse des optischen Systems A verlaufend ist die Ebene E1 dargestellt. Die beiden in den Ebenen E1 und E2 verlaufenden Achsen I1 und I2 sowie die optische Achse A stehen dann jeweils senkrecht aufeinander. Wie bereits erwähnt kann selbstverständlich der Leuchtenkopf 110 während der Nutzung auch derart verschwenkt werden, dass die Ebene E2 nicht horizontal ausgerichtet ist, sondern schräg nach unten bzw. geneigt verläuft. Dies wird insbesondere dann der Fall sein, wenn sich die Leuchte 100 oberhalb eines sich in Liegeposition befindenden Patienten befindet. Für die nachfolgende Erläuterung wird allerdings davon ausgegangen, dass die Ebene E2 horizontal ausgerichtet ist.

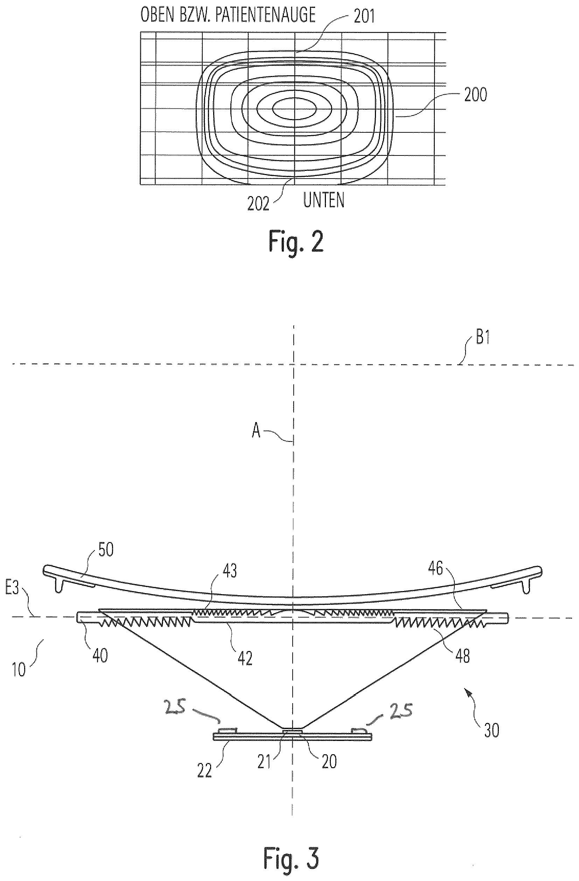

Mit Hilfe der erfindungsgemäßen Leuchte 100 soll dann also u.a. in einem bestimmten Bereich vor der Leuchte 100 in der sog. Objektebene O (siehe Figuren 1 und 3) ein schematisch in den Figuren 1 und 2 dargestelltes Lichtfeld 200 erzielt werden. Die Objektebene O ist hierbei parallel zur Ebene E3 des nachfolgend noch näher beschriebenen Kollimators und somit gemeinsam mit dieser senkrecht zur optischen Achse A ausgerichtet, wobei darauf hinzuweisen ist, dass der Abstand zwischen der Ebene E3 des Kollimators E3 und der Objektebene O und somit der Abstand zwischen der Leuchte 100 und dem Lichtfeld 200 in Realität größer sein wird, als dies in den Figuren gezeigt ist. Wie bereits oben erwähnt wird bei den folgenden Erläuterungen der Ausgestaltung der optischen Komponenten der Leuchte 100 davon ausgegangen, dass die optische Achse A horizontal verläuft und dementsprechend die Objektebene O und die Ebene E3 vertikal ausgerichtet sind. Je nach Ausrichtung des Leuchtenkopfs 110 während des tatsächlichen Gebrauchs der Leuchte 100 wird allerdings ggf. die optische Achse A auch eine Neigung aufweisen oder im Extremfall sogar senkrecht nach unten weisen, was dann auch zu einer entsprechenden Änderung der Ausrichtung der verschiedenen Ebenen führt.

Das Lichtfeld 200 weist hierbei eine leicht abgerundete, im Wesentlichen jedoch rechteckige Form auf, wobei sich das Lichtfeld 200 in horizontaler Richtung - entlang der Achse O2 - weiter erstreckt als in vertikaler Richtung entlang der Achse O1. Eine bevorzugte Besonderheit besteht hierbei darin, dass - wie nachfolgend noch näher erläutert - aufgrund der speziellen Ausgestaltung der optischen Mittel die Lichtabgabe der Leuchte 100 in einer Richtung - im dargestellten Beispiel in vertikaler Richtung - asymmetrisch leicht aufgeweitet wird. Wie durch die das Lichtfeld 200 schematisch darstellenden Linien in Figur 2 angedeutet ist, bedeutet dies, dass in seinem oberen Randbereich 201 das Lichtfeld 200 gegenüber der Umgebung stark abgegrenzt ist, hier also ein hoher Helligkeitsgradient beim Übergang vom Lichtfeld 200 zur nicht beleuchteten Umgebung vorliegt. Diese starke Abgrenzung dient wie bereits erwähnt dazu, zu vermeiden, einen zu untersuchenden Patienten zu blenden, was insbesondere bei zahnärztlichen Untersuchungen oder Behandlungen eine wesentliche Rolle spielt. An der gegenüberliegenden Unterseite 202 hingegen ist bevorzugt die Lichtabgabe leicht aufgeweitet, sodass hier geringere Helligkeitsgradienten vorliegen. Das Lichtfeld 200 läuft also bei dieser bevorzugten Variante zur Unterseite hin sanfter aus, wodurch der Anteil hoher Helligkeitskontraste im gesamten Blickfeld bspw. eines Arztes reduziert wird. Da derart starke Helligkeitskontraste eine letztendlich ermüdende Adaption des menschlichen Auges erfordern, führt diese Maßnahme dazu, dass ein angenehmeres Arbeiten für den Zahnarzt ermöglicht wird.

Abgesehen von diesen Randbereichen ist allerdings vorgesehen, das Lichtfeld 200 über seine gesamte Erstreckung hinweg möglichst homogen und gleichmäßig auszuleuchten, wobei dies im Wesentlichen unabhängig vom Abstand zur Leuchte 100 erfolgen soll. Dies wird mit Hilfe der besonderen Ausgestaltung der Beleuchtungseinheit erzielt, welche weiter unten detailliert erläutert werden soll.

Zunächst ist allerdings zu erwähnen, das mit Hilfe der erfindungsgemäßen Leuchte 100 nunmehr zusätzlich eine zweite Lichtabgabe erzielt werden kann, die in Figur 1 symbolisch durch ein zweites Beleuchtungsfeld 300 dargestellt ist. Diese Darstellung ist tatsächlich rein symbolisch zu verstehen, da mit Hilfe dieser zusätzlichen Lichtabgabe kein in einer bestimmten Objektebene liegendes, streng abgegrenztes Lichtfeld erzielt werden soll, sondern stattdessen diese weitere Lichtabgabe in einen möglichst großen Raumwinkelbereich, möglichst homogen und gleichmäßig erfolgen soll. Insbesondere soll der Winkelbereich deutlich größer sein als der Winkelbereich, unter welchem eine erste LED-Lichtquelle das Lichtfeld 200 erzeugt, sodass dieser Abstrahlbereich 300 das Lichtfeld 200 zwar überdeckt, allerdings eine deutlich größere Ausdehnung aufweist.

Wie nachfolgend näher erläutert wird, wird diese zusätzliche Lichtabgabe mit Hilfe zumindest einer weiteren LED-Lichtquelle erzielt, wobei diese weitere LED-Lichtquelle insbesondere unabhängig von der zur Erzeugung des Lichtfelds 200 genutzten ersten LED-Lichtquelle betrieben werden kann. Die erfindungsgemäße weitere Lichtabgabe kann also bspw. alternativ zur ersten Lichtabgabe vorgenommen werden, wobei in diesem Fall dann eine eher allgemeine, homogene und insbesondere nicht blendende Lichtabgabe in einen großen Raumwinkelbereich erzielt wird. Eine derartige Lichtabgabe wird im Vergleich zu dem Lichtfeld 200 aufgrund der nicht oder nahezu kaum vorhandenen Kontraste als deutlich angenehmer empfunden und kann bspw. während Untersuchungs- oder Behandlungspausen dazu genutzt werden, das Wohlbefinden insbesondere des zu untersuchenden bzw. zu behandelnden Patienten zu verbessern. Hierdurch also wird ein gewisser Wellness-Effekt erzielt, der bspw. dadurch unterstützt werden kann, dass für diese weitere Lichtabgabe im Vergleich zum Lichtfeld 200 eine andere Farbe oder eine andere Farbtemperatur genutzt wird. Auch eine sich zeitlich langsam verändernde Farbe bzw. Farbtemperatur hinsichtlich dieser zweiten Lichtabgabe kann vorgesehen sein, da sich herausgestellt hat, dass derartige Leuchteffekte oftmals als besonders angenehm empfunden werden.

Ein anderes denkbares Anwendungsbeispiel wäre ferner, diese weitere Lichtabgabe dazu zu nutzen, bestimmte Informationen optisch darzustellen. So könnte bspw. durch diese zusätzliche Lichtabgabe in einem bestimmten Farbton ein bestimmter Status der Leuchte 100 oder generell einer zugehörigen zahnärztlichen Behandlungseinheit angezeigt werden. Ein pulsierendes rotes Licht könnte dann bspw. zur Anzeige eines Fehlers bzw. Fehlzustands der Einheit genutzt werden. Letztendlich kann also mit Hilfe dieser weiteren Lichtquelle eine zusätzliche Lichtabgabe erzielt werden, die in vielfältiger Weise genutzt werden kann und mit deren Hilfe die Anwendungsmöglichkeiten für die Leuchte 100 weiter erhöhte werden.

Der optische Aufbau der im Inneren der Leuchte 100 vorgesehenen Beleuchtungseinheit 10 gemäß einer ersten Ausführungsform ist in Figur 3 dargestellt.

Wesentliche Komponenten sind zunächst die Leuchtmittel 20 in Form einer ersten, zentralen LED-Lichtquelle 21 sowie mindestens einer zweiten LED-Lichtquelle 25, die vorzugsweise gemeinsam auf einer entsprechenden Leiterplatte 22 angeordnet sind. Die zur Erzeugung des Lichtfelds 200 vorgesehenen ersten LED-Leuchtmittel 21 bilden eine im Wesentlichen punktförmige einzelne Lichtquelle. Es handelt sich also entweder um eine einzelne Hochleistungs-LED oder um ein verhältnismäßig kompakt gestaltetes LED-Cluster bestehend aus mehreren LEDs. In beiden Fällen ist die LED-Lichtquelle 21 derart ausgestaltet, dass sie Weißlicht mit einer gewünschten Farbtemperatur abgibt. Bei zweiten LED-Lichtquellen 25 handelt es sich hingegen um eher verteilt angeordnete LEDs oder LED-Cluster, die idealerweise variabel ansteuerbar sind, um Licht mit einer gewünschten Intensität sowie einer gewünschten Farbe bzw. Farbtemperatur abgeben zu können.

Das optische System 30, welches das von den Leuchtmitteln 20 in einem verhältnismäßig breiten Winkelbereich abgebebene Licht beeinflusst, besteht aus zwei Komponenten, einerseits einem Kollimator 40 sowie andererseits einer - in Lichtabstrahlrichtung gesehen - dem Kollimator 40 nachfolgenden Abdeckscheibe 50. Diese ist im dargestellten Ausführungsbeispiel leicht gewölbt, insbesondere leicht konkav gewölbt ausgeführt, könnte allerdings ebenso plan oder auch anderweitig gestaltet sein. Sowohl Kollimator 40 als auch Abdeckscheibe 50 bestehen aus einem lichtdurchlässigen Material, insbesondere aus einem Kunststoffmaterial, welches über gute lichtbeeinflussende Eigenschaften verfügt und resistent gegenüber äußeren Einflüssen, insbesondere gegenüber Feuchtigkeit und dergleichen ist. Wie im Folgenden näher erläutert sind Kollimator 40 und Abdeckscheibe 50 insbesondere dahingehend optimiert, dass sie das von der ersten LED-Lichtquelle 21 abgegebene Licht derart beeinflussen, dass das eingangs erwähnte Lichtfeld 200 erhalten wird.

Vorzugsweise ist hierbei vorgesehen, dass der Kollimator 40 durch ein einstückiges, im Wesentlichen plattenförmiges Bauteil gebildet ist, welches die bereits erwähnte Ebene E3 definiert, und in zwei Bereiche unterteilt ist. Ein erster, lichtbrechender Bereich 42 ist hierbei im geometrischen Zentrum des Kollimators 40 vorgesehen und weist auf der den LED-Leuchtmitteln 20 abgewandten Seite lichtbrechende Strukturen 43 auf. Die Aufgabe dieses zentralen Bereichs 42 besteht darin, das entsprechende Strahlenbündel des ersten LED-Leuchtmittels 21 in ein zentrales Lichtfeld umzuwandeln, welches dann über die Abdeckung 50 abgebeben wird.

Den zentralen Bereich 42 umrahmend ist ein äußerer Bereich 46 vorgesehen, in dem das Licht der ersten LED-Leuchtmittel 21 mittels Totalreflexion umgelenkt wird. Die entsprechenden Strukturen 48 befinden sich in diesem Fall auf der den LED-Leuchtmitteln 20 zugewandten Seite und erzeugen mit Hilfe des von den ersten LED-Leuchtmitteln 21 abgegebenen Lichts ein zweites, äußeres Lichtfeld, welches ebenfalls über die Abdeckung 50 abgegeben wird. Das letztendlich angestrebte, gleichmäßige Lichtfeld 200 wird dann durch eine Überlagerung des zentralen und des äußeren Lichtfelds erzielt, wobei diese Überlagerung durch eine nachfolgend näher beschriebene Aufweitungsstruktur, die sich auf der den LED-Leuchtmitteln 20 zugewandten Seite der Abdeckscheibe 50 befindet, erzielt wird. Dadurch, dass durch die erste LED-Lichtquelle 21 und die zugehörigen Komponenten 40 und 50 des optischen Systems 30 eine im Wesentlichen ausgedehnte gleichmäßig leuchtende Fläche als Lichtquelle realisiert wird, wird in vorteilhafter Weise der Effekt einer Defokussierung des Ziellichtfeldes beim Verlassen des optimalen Abbildungsabstandes erzielt. Mit anderen Worten, das optische System 30 ist zwar grundsätzlich derart ausgeführt, dass in einem vorgegebenen Abstand von bspw. 700mm eine exakte Überlagerung zwischen dem zentralen und dem äußeren Lichtfeld erzielt wird und dementsprechend das Ziellichtfeld 200 besonders gleichmäßig und homogen ausgeleuchtet wird. Wird allerdings von diesem Idealabstand abgewiesen, so ist die sich hierbei ergebende Veränderung hinsichtlich der gleichmäßigen Ausleuchtung weniger stark ausgeprägt als bei anderen Leuchten im Stand der Technik. Im Wesentlichen kann in einem Bereich zwischen 500 und 800mm Entfernung nach wie vor eine optimale homogene Ausleuchtung des Lichtfeldes 200 erzielt werden.

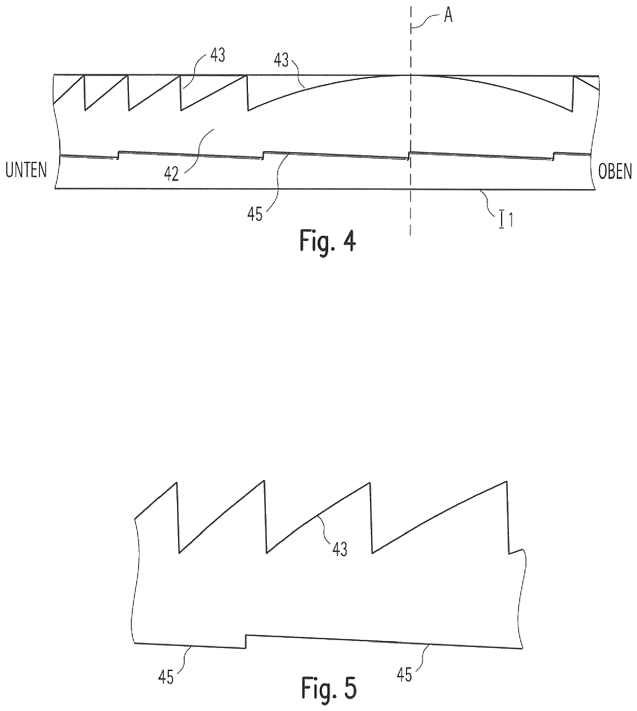

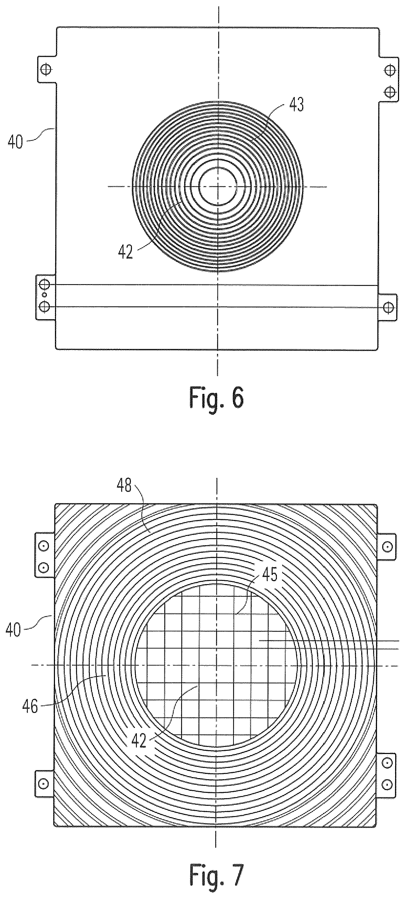

Die Ausgestaltung des Kollimators 40 kann den Figuren 4 bis 7 entnommen werden. Es handelt sich wie bereits erwähnt um ein im Wesentlichen plattenförmiges Kunststoffbauteil, welches - wie die Figuren 6 und 7 zeigen - eine im Wesentlichen quadratische Form aufweist und dazu dient, das über einen großen Winkelbereich abgegebene Strahlenbündel der ersten LED-Lichtquelle 21 in ein im Wesentlichen paralleles Strahlenbündel umzusetzen. Hierzu weisen die Oberflächen des Kollimators 40 bestimmte lichtbeeinflussende Strukturen auf, die nachfolgend näher erläutert werden sollen.

So ist zunächst in einem zentralen Bereich 42 auf der den LED-Leuchtmitteln 20 abgewandten Seite des Kollimators 40 eine fresnelartige Struktur 43 vorgesehen, die mittels Lichtbrechung die den Kollimator 40 verlassenden Lichtstrahlen der ersten LED-Lichtquelle 21 derart umlenken soll, dass diese im Wesentlichen parallel zur optischen Hauptachse A des Systems ausgerichtet werden. Derartige Fresnelstrukturen sind an sich bereits bekannt und tragen dazu bei, dass im Vergleich zu einer klassischen konvexen Linse die Dicke der entsprechenden optischen Komponente reduziert werden kann. Letztendlich kann mit Hilfe der insbesondere in den Figuren 4 und 5 erkennbaren sägezahnartigen Struktur, die - wie in Figur 6 erkennbar - eine Rotationsymmetrie um das Zentrum bzw. die Achse A aufweist, eine äußerst effiziente Bündelung des entsprechenden Lichts erzielt werden.

Den zentralen Bereich 42 ringartig umgebend, nunmehr allerdings auf der den Leuchtmitteln 20 zugewandten Seite, weist der Kollimator 40 ferner einen äußeren Bereich 46 auf, der wiederum mit fresnelartigen Strukturen 48 versehen ist. Auch diese sind entsprechend der Darstellung von Figur 7 bzgl. der optischen Hauptachse A rotationssymmetrisch ausgebildet und dienen dazu, die eher seitlich abgegebenen Lichtstrahlen der ersten LED-Lichtquelle derart zu beeinflussen, dass diese wiederum parallel zur optischen Achse A ausgerichtet werden. Während allerdings die Fresnelstrukturen 43 des zentralen Bereichs 42 die entsprechenden Lichtstrahlen mittels Brechung beeinflussen, erfolgt durch die Fresnelstrukturen 48 des äußeren Bereichs 46 eine Beeinflussung der Lichtstrahlen mittels Totalreflexion. D.h., diese wiederum sägezahnartigen Strukturen sind derart ausgeführt, dass Lichtstrahlen der ersten LED-Lichtquelle 21 zunächst in die rippenartigen Vorsprünge eintreten können, allerdings aufgrund des Unterschieds der optischen Dichte zwischen Kollimator 40 und umgebender Luft derart totalreflektiert werden, dass sie den Kollimator 40 wiederum an der den Leuchtmitteln 20 abgewandten Seite verlassen. Durch die entsprechende Neigung der Flanken der totalreflektierenden Strukturen 48 ist wiederum gewährleistet, dass eine Ausrichtung des Lichts der ersten LED-Lichtquelle 21 parallel zur optischen Achse A des Systems erfolgt.

Das auf diese Weise durch den Kollimator 40 beeinflusste Licht der ersten LED-Lichtquelle 21 wird dann durch die Abdeckscheibe 50 auf das eigentliche Lichtfeld 200 projiziert, wobei diese hierzu eine nachfolgend noch näher beschriebene Linsenstruktur aufweist, welche letztendlich bewirkt, dass zentrales Lichtfeld und äußeres Lichtfeld überlagert werden, um eine homogene gleichmäßige Ausleuchtung zu erzielen.

Das Zusammenwirken dieser Komponenten bestehend aus der kompakt gestalteten ersten LED-Lichtquelle 21, dem Kollimator 40 mit den lichtbrechenden und totalreflektierenden Strukturen und der Abdeckscheibe 50 führt zunächst dazu, dass das letztendlich erzielte Lichtfeld 200 im Randbereich einen großen Helligkeitsgradienten aufweist, also gegenüber der Umgebung stark abgegrenzt ist. Dies ist insbesondere an dessen Oberseite erwünscht, also in Richtung der Augen eines zu untersuchenden Patienten, um hier Blendungen zu vermeiden. An der gegenüberliegenden Seite hingegen sollte wie bereits erwähnt eine deutlich unschärfere Abgrenzung des Lichtfelds 200 vorliegen, um eine Reduzierung von Ermüdungserscheinungen des Behandlers zu erzielen. D.h., das Lichtfeld 200 sollte idealerweise in einer Richtung eine Asymmetrie mit einem weichen Auslauf zur Unterseite hin aufweisen.

Um diesen vorteilhaften Effekt zu erzielen, kann an der den lichtbrechenden Strukturen 43 des zentralen Bereichs 42 gegenüberliegenden Rückseite, also an der den Leuchtmitteln 20 zugewandten Seite des Kollimators 40 eine zusätzliche Strukturierung vorgesehen sein. Diese besteht bei dem in den Figuren 3 bis 7 dargestellten ersten Ausführungsbeispiel aus segmentartigen einzelnen Kacheln 45, welche - wie in Figur 7 erkennbar - den gesamten zentralen Bereich 42 bis zur äußeren Struktur 46 hin matrixartig ausfüllen. Diese facettenartigen Kacheln 45 weisen nunmehr eine leichte Neigung bzw. Kippung auf, um die oben erwähnte einseitige Aufweitung des Lichtfelds 200 erzielen zu können. Insbesondere sind hierbei die Kacheln 45 um eine horizontale Achse (beziehungsweise allgemein um eine Achse, welche in der Ebene des Kollimators 40 liegt und im Wesentlichen senkrecht zur Richtung der asymmetrischen Aufweitung steht) gekippt, d.h., sie schließen im dargestellten Fall mit der vertikalen Achse I1 oder O1 einen kleinen Winkel ein (siehe Figur 4), sodass in den Kollimator 40 eintretende Lichtstrahlenbündel der ersten LED-Lichtquelle 21 leicht zur Unterseite hin aufgeweitet werden. Selbst eine geringe Neigung der Kacheln 45, wie sie in den Figuren 4 und 5 erkennbar ist, führt hier bereits dazu, dass der untere Randbereich des Lichtfelds 200 einen etwas reduzierten Helligkeitsgradienten aufweist.

Alternativ oder ergänzend zu der soeben beschriebenen Kippung der Kacheln 45 um eine senkrecht zur Richtung der asymmetrischen Aufweitung stehende Achse wäre es auch denkbar, in entsprechender Weise die Linsenstruktur auf der Abdeckscheibe 50 zu kippen um den angestrebten vorteilhaften Effekt der asymmetrischen Lichtfeldverteilung zu erzeugen. Dies wird zu einem späteren Zeitpunkt noch näher erläutert.

Darüber hinausgehend können allerdings die Kacheln 45 auch noch in der vertikalen Achse I1 bzw. O1 (beziehungsweise allgemein um eine Achse, welche parallel zur Richtung der asymmetrischen Aufweitung des Lichtfelds verläuft) gekippt sein, wobei sie dann vorzugsweise bzgl. der Ebene E1, welche senkrecht zur Ebene E3 des Kollimators 40 steht und durch eine parallel zur Richtung der asymmetrischen Aufweitung verlaufende Achse I1 aufgespannt wird, symmetrisch angeordnet sind. Hierdurch wird die horizontale Ausdehnung des zentralen Lichtfelds 200 beeinflusst, was letztendlich zusätzlich zur homogenen Ausleuchtung des Lichtfelds 200 beiträgt.

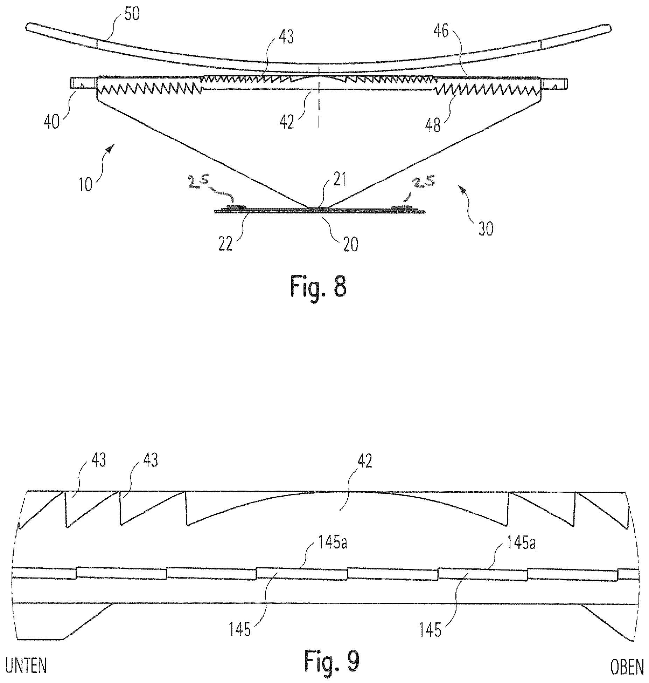

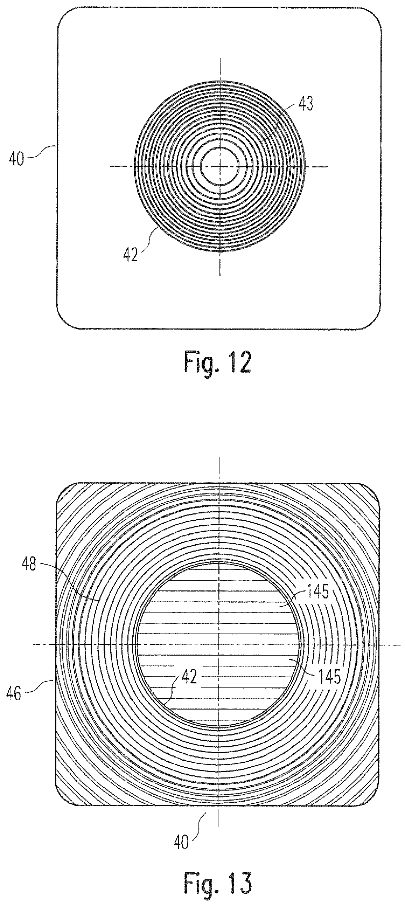

Diese weitere Kippung der Kacheln 45 um eine vertikale Achse (bzw. um eine parallel zur Richtung der asymmetrischen Aufweitung verlaufenden Achse) und die symmetrische Ausgestaltung hinsichtlich der vertikalen Ebene E1 führt insgesamt gesehen zu einer etwa konkav-artigen Ausgestaltung der Oberfläche der den Leuchtmitteln 20 zugewandten Rückseite des zentralen Bereichs 42 des Kollimators 40. Der hieraus resultierende Effekt der nochmals etwas homogeneren Ausleuchtung des Lichtfelds 200 kann allerdings auch dadurch erreicht werden, dass die auf gleicher Höhe liegenden einzelnen Kacheln zu einer größeren Fläche vereint werden, die dann ebenfalls eine entsprechende Krümmung bzw. Wölbung aufweist. Ein entsprechendes Ausführungsbeispiel hierzu ist in den Figuren 8 bis 13 dargestellt und soll nachfolgend erläutert werden, wobei vergleichbare Elemente mit gleichen Bezugszeichen versehen wurden.

Auch bei diesem zweiten Ausführungsbeispiel besteht somit das optische System der erfindungsgemäßen Leuchte 100 aus dem plattenförmigen Kollimator 40 und der dem Kollimator 40 nachfolgenden Abdeckscheibe 50 mit der Linsenstruktur. Wiederum weist der Kollimator 40 einen zentralen Bereich 42 auf, der an seiner den LED-Leuchtmitteln 20 abgewandten Seite mit lichtbrechenden Strukturen 43 versehen ist, wobei ferner ein den zentralen Bereich 42 umgebender äußerer Bereich 46 vorgesehen ist, der auf einer den LED-Leuchtmitteln 20 zugewandten Seite mit zur Totalreflexion ausgebildeten Strukturen 48 versehen ist. Sowohl die Strukturen 43 des zentralen Bereichs 42 als auch die Strukturen 48 des ringartigen äußeren Bereichs 46 entsprechen hierbei hinsichtlich ihrer Ausgestaltung und ihrer Funktion den Strukturen des Ausführungsbeispiels der Figuren 3 und 7. Somit ergeben sich hinsichtlich dieser Merkmale keine Unterschiede zum ersten Ausführungsbeispiel.

Der entscheidende Unterschied zwischen dem ersten Ausführungsbeispiel der Figuren 3 bis 7 und dem zweiten Ausführungsbeispiel der Figuren 8 bis 13 liegt in der Ausgestaltung der den lichtbrechenden Strukturen 43 des zentralen Bereichs 42 gegenüberliegenden Rückseite des Kollimators 40, die bei dem ersten Ausführungsbeispiel matrixartig mit den bereits erwähnten Kacheln 45 bedeckt ist.

Bei dem zweiten Ausführungsbeispiel sind wiederum Teilflächen 145 vorgesehen, die nunmehr allerdings in Form von streifenförmigen Flächenbereichen 145 vorliegen, die sich bei einer Ausrichtung der Leuchte entsprechend Figur 1 jeweils horizontal (oder allgemein senkrecht zur Richtung der asymmetrischen Aufweitung) vom linken Ende des zentralen Bereichs 42 bis zum rechten Ende erstrecken. Wiederum sind diese streifenförmigen Flächenbereichen 145 derart angeordnet, dass sie die Rückseite des zentralen Bereichs 42 vorzugsweise vollständig abdecken.

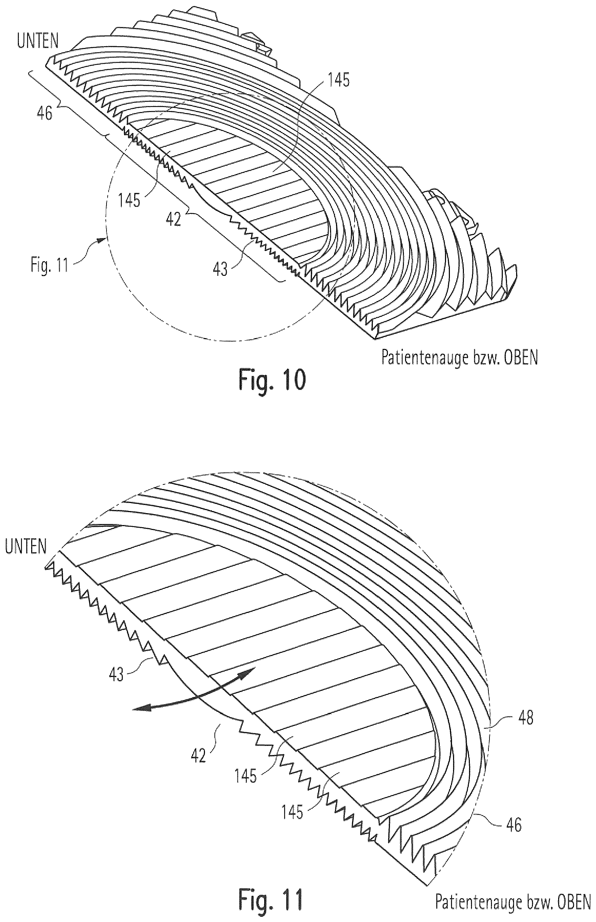

Analog zu den Kacheln 45 besteht dabei die wesentliche Funktion der streifenförmigen Teilflächen 145 zunächst darin, die erfindungsgemäße asymmetrische Aufweitung des Lichtfelds 200 zu erzielen, derart, dass an der Unterseite bzw. der dem Patientenauge gegenüberliegenden Seite des Lichtfelds 200 ein geringerer Helligkeitskontrast auftritt als am gegenüberliegenden Randbereich. Auch in diesem Fall sind hierzu die streifenförmigen Teilflächen 145 jeweils um eine Achse gekippt, welche in der Ebene E3 des Kollimators 40 liegt und im Wesentlichen senkrecht zu der Richtung asymmetrischen der Aufweitung des Lichtfelds 200 steht. Die entsprechende Schnittdarstellung der Figur 9, welche der Darstellung von Figur 4 des ersten Ausführungsbeispiels entspricht, zeigt also eine vergleichbare Neigung der Teilflächen 145, durch welche in analoger Weise die Lichtstrahlen beeinflusst, wie dies oben im Zusammenhang mit den Figuren 3 bis 7 erläutert wurde. Die hieraus insgesamt resultierende sägezahnartige Struktur des entsprechenden Oberflächenbereichs des Kollimators 40 kann auch den beiden perspektivischen Teilschnitt-Ansichten der Figuren 10 und 11 entnommen werden.

Zusätzlich ist vorgesehen, dass die streifenförmigen Flächenbereiche 145 bezüglich der Richtung der asymmetrischen Aufweitung des Lichtfelds 200 konkav gewölbt sind, wobei die Richtung der Wölbung stark überhöht in Figur 11 schematisch durch den Doppelpfeil dargestellt ist. Die konkave Ausgestaltung der streifenförmigen Flächenbereiche 145 ist dabei wiederum vorzugsweise derart, dass sich bezüglich der Ebene E1, welche senkrecht zur Ebene E3 des Kollimators 40 steht und durch eine parallel zur Richtung der asymmetrischen Aufweitung verlaufende Achse I1 aufgespannt wird, eine symmetrische Konfiguration ergibt. In der Schnittdarstellung der Figur 9 sind aufgrund dieser konkaven Krümmung die hinteren Endbereiche der streifenförmigen Flächenbereiche 145 jeweils sichtbar.

Die sich hierbei ergebene Oberflächengestaltung der Rückseite des zentralen Bereichs 42 des Kollimators 40 entspricht insgesamt derjenigen des Ausführungsbeispiels der Figuren 3 bis 7, wobei nunmehr allerdings die auf gleicher Höhe liegenden einzelnen Kacheln 45 durch sich kontinuierlich und stetig erstreckende Oberflächenbereiche 145 ersetzt wurden.

Im Vergleich zum ersten Ausführungsbeispiel der Figuren 3 bis 7 stellt dabei das zweite Ausführungsbeispiel der Figuren 8 bis 13 die bevorzugte Ausführungsform dar, da nunmehr die Kanten an den Übergängen zweier benachbarter Kacheln 45 eliminiert werden. Derartige Kanten bringen grundsätzlich die Gefahr einer ungewünschten, unkontrollierbaren Lichtstreuung mit sich, sodass also durch die Gestaltung der Oberfläche entsprechend dem zweiten Ausführungsbeispiel nochmals eine etwas bessere Kontrolle des Lichts durch den Kollimator 40 erzielt werden kann.

Die oben beschriebenen Maßnahmen tragen dem Umstand Rechnung, dass das Spektrum des von der ersten LED-Lichtquelle 21 abgegebenen Lichts vom Abstrahlwinkel abhängig ist. Insbesondere ist das im Zentrum bzw. zentral abgegebene Licht kälter und wird mit steigendem Abstrahlwinkel radial nach außen wärmer, was auf die zunehmende Weglänge des von dem LED-Chip abgegebenen blauen Licht durch das entsprechende Farbumwandlungsmaterial, bspw. durch den Phosphor, zurückzuführen ist. Das Licht des zentralen Lichtfelds und das des äußeren Lichtfelds wird also zunächst eine unterschiedliche Farbe bzw. Farbtemperatur aufweisen. Dadurch allerdings, dass mit Hilfe der Abdeckung 50 letztendlich eine Überlagerung beider Lichtfelder erzielt wird, wird insgesamt eine homogene Ausleuchtung erzielt. Zur gezielten Durchmischung des Lichtfeldes bzw. zur Erlangung eines farbhomogenen Lichtfelds trägt auch bei, dass die lichtbrechenden Strukturen 43 der zentralen Kollimationsstruktur und die Flächen 48 der äußeren Kollimationsstruktur 46 als asphärische Flächen ausgeführt sind. Ihre Form ist dabei abhängig von dem Abstand gegenüber dem Zentrum der optischen Achse A des Kollimators 40, insgesamt weisen jedoch beide Strukturen eine Rotationssymmetrie auf, wie in den Figuren erkennbar ist.

Die auf diese Weise durch den Kollimator 40 beeinflussten Lichtstrahlen der ersten LED-Lichtquelle 21 werden dann abschließend durch die Abdeckscheibe 50 beeinflusst, wobei diese für beide Ausführungsbeispiele des Kollimators 40 in gleicher Weise ausgeführt ist. Die Abdeckscheibe 50 kann wie bereits erwähnt leicht konkav oder auch eben ausgeführt sein und besitzt auf ihrer den LED-Leuchtmitteln 20 zugewandten Seite eine Linsenstruktur. Die den Leuchtmitteln 20 abgewandte Seite hingegen ist vorzugsweise unstrukturiert, also glatt ausgebildet und ermöglicht dementsprechend eine einfache Reinigung, was insbesondere dann von Vorteil ist, wenn die Abdeckung 50 gleichzeitig die Außenseite der Leuchte 100 bildet.

Ebenso wie der Kollimator 40 ist auch die Linsenstruktur der Abdeckscheibe 50 zweiteilig ausgestaltet. Wie in Figur 8 angedeutet ist hierbei wiederum ein erster zentraler Bereich 52 mit zugehörigen ersten Linsen 53 sowie ein äußerer Bereich 56 mit zugehörigen zweiten Linsen 58 vorgesehen. Beide Bereiche der Linsenstruktur entsprechen hierbei den beiden Bereichen des Kollimators 40. Mit anderen Worten, durch den zentralen Bereich 42 des Kollimators 40 beeinflusste Lichtstrahlen sollen durch den zentralen Linsenbereich 52 der Abdeckung beeinflusst werden, während hingegen das über den äußeren Bereich 46 des Kollimators 40 abgegebene Licht durch die äußere Linsenstruktur beeinflusst wird.

Beide Linsenstrukturen 52 und 56 sind allerdings jeweils als Mikrolinsenarray ausgeführt und dienen dazu, als Aufweitungsstruktur die entsprechenden Lichtteilstrahlenbündel der ersten LED-Lichtquelle 21 auf den zu beleuchtenden Bereich zu projizieren. Das Verhältnis von Höhe zu Breite der Einzellinsen definiert hierbei den Wert der horizontalen und vertikalen Aufweitung des Lichtfelds 200, wobei diese Werte für die zentralen Linsen 43 und die äußeren Linsen 58 leicht unterschiedlich sind, also beide Lichtfelder leicht unterschiedlich aufgeweitet werden. Letztendlich führen diese Maßnahmen dann dazu, dass zentrales Lichtfeld und äußeres Lichtfeld innerhalb des für eine Beleuchtung vorgesehenen Abstands von etwa 500 bis 800mm im Wesentlichen vollständig überlagert werden und somit ein insgesamt homogen ausgeleuchtetes Lichtfeld 200 erhalten wird.

Jede einzelne Linse der Abdeckscheibe 50 projiziert hierbei das komplette zentrale bzw. äußere Lichtfeld, sodass die Abschattung einzelner Linsen oder Teile der Abdeckscheibe 50 nicht zu Schatten in dem Lichtfeld 200 führt. Auch dies trägt zu einer optimierten Beleuchtung bei. Im dargestellten Ausführungsbeispiel weisen die Linsen des äußeren Bereichs eine verschiedene Größe und Form im Vergleich zu den Linsen des zentralen Bereichs auf. Insbesondere sind die Linsen 53 des zentralen Bereichs 52 etwa quadratisch ausgeführt, während hingegen die Linsen 58 des äußeren Bereichs eine eher rechteckige Form besitzen. Dies muss allerdings nicht zwingend der Fall sein. Entscheidend ist lediglich, dass die Aufweitung der einzelnen Strahlenbündel durch die Linsen derart erfolgt, dass insgesamt eine vollständige Überlagerung stattfindet, die weitestgehend unabhängig vom Abstand zur Leuchte 100 zu einer gleichmäßigen Ausleuchtung führt. Im Ergebnis ergibt sich ein homogenes Ziellichtfeld 200, welches die gewünschten Eigenschaften aufweist.

Um die oben erläuterte vorteilhafte asymmetrische Lichtfeldverteilung zu erreichen, ist es denkbar, dass alternativ oder ergänzend zur Neigung der Kacheln 45 oder der streifenförmigen Teilflächen 145 ein Teil der Linsenstrukturen 52 und / oder der Linsenstrukturen 56 oder alle Linsen 53, 58 bezüglich der Ebene E3 des Kollimators um eine Achse gekippt sind, welche im Wesentlichen senkrecht zur Richtung der asymmetrischen Aufweitung ausgerichtet ist . Auch diese Maßnahme führt zu der vorteilhaften asymmetrischen Aufweitung des Lichtfelds 200 an dessen Unterseite 202, so dass ggf. auf die entsprechende geneigte Ausrichtung der Kacheln 45 bzw. streifenförmigen Teilflächen 145 auch verzichtet werden könnte.

Die bisherigen Erläuterungen betrafen in erster Linie die Frage, inwiefern das optische System 30 bestehend aus Kollimator 40 und Abdeckscheibe 50 das Licht der ersten LED-Lichtquelle 21 beeinflusst. Aus dem Obigen ergibt sich, dass die Ausgestaltung und Positionierung des optischen Systems 30 primär in Bezug auf die im Wesentlichen punktförmige erste LED-Lichtquelle 21 abgestimmt ist, um das von dieser Lichtquelle 21 abgegebene Licht gezielt zu beeinflussen, um in definierter Weise das Lichtfeld 200 zu erzielen.

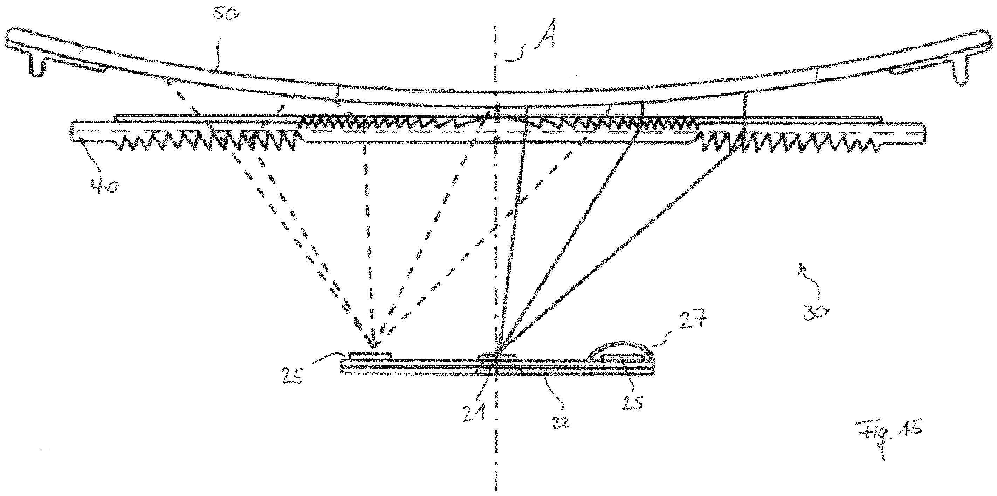

Wird nunmehr wie in Figur 15 dargestellt versetzt zu der ersten LED-Lichtquelle 21 eine weitere zweite LED-Lichtquelle 25 angeordnet, so führt diese versetzte Anordnung im Vergleich zum optischen Zentrum (also außerhalb der optischen Achse A) dazu, dass nunmehr das Licht dieser zweiten LED-Lichtquelle 25 in deutlich anderer Weise, insbesondere im Wesentlichen chaotisch bzw. unkontrolliert beeinflusst wird. Figur 15 verdeutlicht diesen Unterschied, wobei erkennbar ist, dass aufgrund der abgestimmten Anordnung der ersten LED-Lichtquelle 21 im optischen Zentrum von diesem Punkt ausgehende Lichtstrahlen wie oben erläutert durch den Kollimator 40 gezielt derart beeinflusst werden, dass sie alle im Wesentlichen parallel auf die Abdeckscheibe 50 treffen und dann durch die dort vorgesehenen Linsen in der gewünschten Weise definiert beeinflusst werden. Dies erfolgt unabhängig davon, unter welchem Winkel das Licht von der ersten LED-Lichtquelle 21 abgegeben wird, da die verschiedenen Strukturen des Kollimators 40 gezielt derart ausgeführt sind, dass durch Brechung und/oder Totalreflexion eine Umlenkung des Lichts in der gewünschten Weise erfolgt.

Von einem anderen Punkt ausgehende Lichtstrahlen hingegen, insbesondere die von der zweiten LED-Lichtquelle 25 ausgehenden Lichtstrahlen, treffen - an gleichen Stellen - unter anderen Einfallswinkeln auf den Kollimator 40, sodass sie durch diesen nicht mehr in der ursprünglich vorgesehenen Weise gebrochen oder totalreflektiert werden, sondern letztendlich unter unterschiedlichsten Winkeln den Kollimator 40 verlassen. Dies gilt sowohl für Lichtstrahlen der zweiten LED-Lichtquelle 25, die den zentralen Bereich 42 des Kollimators 40 treffen, als auch für Lichtstrahlen, die auf den äußeren Bereich 46 treffen. Bereits sehr geringe Abweichungen im Winkel, unter denen das Licht der zweiten LED-Lichtquelle 25 auf den Kollimator 40 trifft, können bereits zu einer vollständig anderen Beeinflussung durch den Kollimator 40 führen, sodass dieser für das Licht der zweiten LED-Lichtquelle 25 eher eine streuende Funktion hat und dementsprechend das Licht unter einem äußerst großen Winkelbereich auf die Abdeckscheibe 50 trifft. In diesem Fall üben dann auch die an der Abdeckscheibe 50 vorgesehenen Linsen nicht mehr die ursprünglich vorgesehene Funktion aus, sodass das Licht der zweiten LED-Lichtquelle 25 insgesamt gesehen unkontrolliert über einen großen Winkelbereich von der Leuchte 100 abgegeben wird.

Werden nunmehr mehrere derartige zweite LED-Lichtquellen 25 verteilt um die erste LED-Lichtquelle 21 herum angeordnet, so wird dieser Effekt zusätzlich verstärkt und letztendlich wird das Licht dieser zweiten LED-Lichtquellen 25 in einen sehr großen Raumwinkelbereich gleichmäßig und homogen abgegeben, was zu einer von einem Beobachter als äußerst angenehm empfundenen allgemeinen Beleuchtung führt. Ggf. kann dies zusätzlich noch dadurch verstärkt werden, dass - wie auf der rechten Seite von Figur 15 dargestellt - der zweiten LED-Lichtquelle 25 zusätzlich ein Diffusor 27 zugeordnet ist. Eine derartige Maßnahme ist allerdings bei einer entsprechend gleichmäßigen Verteilung der zweiten LED-Lichtquelle 25 nicht zwingend erforderlich.

Aufgrund der verschiedenen Positionierung der verschiedenen LED-Lichtquellen 21 und 25 wird also das von diesen abgegebene Licht durch das optische System 30 in vollkommen unterschiedlicher Weise beeinflusst. Während das Licht der sich im optischen Zentrum befindenden ersten LED-Lichtquelle 21 in vorgegebener definierter Weise durch den Kollimator 40 parallelisiert und anschließend durch die Abdeckscheibe 50 in gewünschter Weise projiziert wird, liegt für das Licht der zweiten LED-Lichtquelle 25 eher eine chaotische Beeinflussung vor, die zu einer homogenen gleichmäßigen Lichtabgabe in einen großen Winkelbereich führt. Bereits ein verhältnismäßig geringer Versatz zum optischen Zentrum (bzw. zur optischen Achse A) führt dazu, dass das entsprechende Licht nicht mehr in der definierten Weise beeinflusst wird, wobei der Abstand zwischen der ersten LED-Lichtquelle 21 und der bzw. den zweiten LED-Lichtquellen 25 in etwa zwischen 10 mm und 40 mm beträgt. Die ersten und zweiten LED-Lichtquellen sind hierbei vorzugsweise auf einem gemeinsamen Träger 22 angeordnet, der in einem Abstand von etwa 40 mm bis 60 mm von dem Kollimator angeordnet ist, sodass nach wie vor eine kompakte Bauform mit wenigen Bauteilen erzielt wird. Dennoch besteht die Möglichkeit, beide Lichtquellen 21, 25 unabhängig voneinander zu betreiben, um je nach Situation eine der beiden Lichtquellen zu aktivieren, wobei selbstverständlich auch ein gleichzeitiger Betrieb grundsätzlich denkbar wäre.

Dabei handelt es sich bei den zweiten LED-Lichtquellen 25 insbesondere um Lichtquellen, deren Farbe oder Farbtemperatur einstellbar ist. Während für die Erzeugung des Lichtfelds 200 eine bestimmte Farbtemperatur vorgegeben ist, besteht für die ergänzende Beleuchtung mit Hilfe der zweiten LED-Lichtquellen 25 keinerlei Beschränkung, wobei hier dann insbesondere auch die Möglichkeit bestehen würde, nach einem bestimmten Zeitschema Licht in einer sich verändernden Farbe oder Farbtemperatur abzugeben.

Die Möglichkeiten zur Lichtabgabe werden dementsprechend mit Hilfe der erfindungsgemäßen Erweiterung nochmals deutlich erhöht, sodass insgesamt gesehen eine Leuchte zur Verfügung gestellt wird, welche einerseits eine optimierte Beleuchtung eines Behandlungsbereichs ermöglicht, andererseits die Möglichkeit eröffnet, in anderer Art und Weise Licht abzugeben, um neuartige Beleuchtungsaufgaben zu erfüllen.

## Patentansprüche

1. Medizinische Leuchte (100), insbesondere zahnärztliche Behandlungsleuchte für das intraorale Ausleuchten eines Operationsfelds, aufweisend zumindest eine Beleuchtungseinheit (10) mit Leuchtmitteln (20) und optischen Mitteln (30) zur Erzeugung eines Lichtfelds (200) in einer Objektebene (O),
wobei die Leuchtmittel (20) eine erste, im Wesentlichen punktförmige LED-Lichtquelle (21) und die optischen Mittel (30) einen plattenartigen Kollimator (40) sowie eine Abdeckscheibe (50) aufweisen,
wobei der Kollimator (40) einen zentralen Bereich (42), der auf einer den Leuchtmitteln (20) abgewandten Seite mit lichtbrechenden Strukturen (43) versehen ist, sowie einen den zentralen Bereich (42) umgebenden äußeren Bereich (46) aufweist, der auf einer den Leuchtmitteln (20) zugwandten Seite mit zur Totalreflexion ausgebildeten Strukturen (48) versehen ist,
und wobei die Abdeckscheibe (50) mit einer Linsenstruktur versehen ist, welche eine Vielzahl von Einzellinsen aufweist, die dazu ausgebildet sind, das von dem Kollimator (40) abgegebene und in die Linsen eintretende Licht der ersten LED-Lichtquelle (21) jeweils auf die Objektebene zur Erzeugung des Lichtfelds (200) zu projizieren, **dadurch gekennzeichnet,**
**dass** die Leuchtmittel (20) mindestens eine zweite LED-Lichtquelle (25) umfassen, die derart positioniert ist, dass das von der mindestens einen zweiten LED-Lichtquelle (25) stammende Licht über den Kollimator (40) und die Abdeckscheibe (50) in einen Winkelbereich abgestrahlt wird, der größer ist als der Winkelbereich, unter welcher die erste Lichtquelle (21) das Lichtfeld (200) erzeugt.

2. Medizinische Leuchte nach Anspruch 1,
**dadurch gekennzeichnet,**
**dass** durch den Kollimator (40) ein optisches Zentrum definiert ist, in dem die erste LED-Lichtquelle (21) positioniert ist, wobei die mindestens eine zweite LED-Lichtquelle (25) außerhalb des optischen Zentrums angeordnet ist.

3. Medizinische Leuchte nach Anspruch 2,
**dadurch gekennzeichnet,**
**dass** die mindestens eine zweite LED-Lichtquelle (25) derart versetzt axial zur ersten LED-Lichtquelle (21) positioniert ist, dass das abgestrahlte Licht unter einem Winkel auf den äußeren Bereich (46) des Kollimators (40) trifft, so dass im Wesentlichen keine Totalreflexion an den ausgebildeten Strukturen (48) auftreten.

4. Medizinische Leuchte nach Anspruch 2 oder 3,
**dadurch gekennzeichnet,**
**dass** die mindestens eine zweite LED-Lichtquelle (25) um ca. 10 mm bis 40 mm versetzt zu der ersten LED-Lichtquelle (21) angeordnet ist.

5. Medizinische Leuchte nach einem der vorherigen Ansprüche,
**dadurch gekennzeichnet,**
**dass** die mindestens eine zweite LED-Lichtquelle (25) mehrere LEDs oder LED-Cluster aufweist, die verteilt, vorzugsweise gleichmäßig verteilt um die erste LED-Lichtquelle (21) angeordnet sind.

6. Medizinische Leuchte nach einem der vorherigen Ansprüche,
**dadurch gekennzeichnet,**
**dass** die erste LED-Lichtquelle (21) und die mindestens eine zweite LED-Lichtquelle (25) in einer gemeinsamen Ebene angeordnet sind, vorzugsweise auf einem gemeinsamen Trägerelement (22) angeordnet sind,
wobei der Abstand der Ebene, in der die LED-Lichtquellen (21, 25) angeordnet sind, zur Ebene des Kollimators (40) etwa 40 mm bis 60 mm beträgt.

7. Medizinische Leuchte nach einem der vorherigen Ansprüche,
**dadurch gekennzeichnet,**
**dass** der mindestens einen zweiten LED-Lichtquelle (25) ein Diffusor (27) zugeordnet ist, der das Licht der mindestens einen zweiten LED-Lichtquelle (25) beeinflusst, bevor es in den Kollimator (40) eintritt.

8. Medizinische Leuchte nach einem der vorherigen Ansprüche,
**dadurch gekennzeichnet,**
**dass** die mindestens eine zweite LED-Lichtquelle (25) dazu ausgebildet ist, Licht mit einer von dem Licht der ersten LED-Lichtquelle (21) abweichenden Farbe oder Farbtemperatur abzugeben, wobei vorzugsweise die Farbe oder Farbtemperatur des von der mindestens zweiten LED-Lichtquelle (25) abgegebenen Lichts veränderbar ist.

9. Medizinische Leuchte nach einem der vorherigen Ansprüche,
**dadurch gekennzeichnet,**
**dass** die den Leuchtmitteln (20) zugewandte Rückseite des zentralen Bereichs (42) des Kollimators (40) mit Teilflächen (45, 145) versehen ist, welche in Bezug zu einer Ebene (E3) des Kollimators (40) und damit zur Objektebene (O) eine Neigung aufweisen, um das Lichtfeld (200) in einer Richtung asymmetrisch aufzuweiten.

10. Medizinische Leuchte nach Anspruch 9,
**dadurch gekennzeichnet,**
**dass** zumindest einige der Teilflächen (45, 145), vorzugsweise alle, jeweils um eine Achse gekippt sind, welche in der Ebene (E3) des Kollimators (40) liegt und im Wesentlichen senkrecht zur Richtung der asymmetrischen Aufweitung steht.

11. Medizinische Leuchte nach Anspruch 9,
**dadurch gekennzeichnet,**
**dass** die Teilflächen (145) streifenförmig ausgebildet sind und sich jeweils im Wesentlichen senkrecht zur Richtung der asymmetrischen Aufweitung entlang ihrer jeweiligen Kippachse erstrecken,
wobei vorzugsweise die streifenförmigen Flächenbereiche (145) bezüglich der Richtung der asymmetrischen Aufweitung konkav gewölbt sind und
besonders bevorzugt die streifenförmigen Flächenbereiche (145) jeweils bezüglich einer Ebene (E1), welche senkrecht zur Ebene (E3) des Kollimators (40) steht und durch eine parallel zur Richtung der asymmetrischen Aufweitung verlaufende Achse (I1) aufgespannt wird, symmetrisch ausgebildet sind.

12. Medizinische Leuchte nach einem der vorherigen Ansprüche,
**dadurch gekennzeichnet,**
**dass** die lichtbrechenden Strukturen (43) des zentralen Bereichs (42) des Kollimators (40) eine Fresnel-Struktur bilden,
wobei vorzugsweise die zur Totalreflexion ausgebildeten Strukturen (48) des Kollimators (40) eine den Leuchtmitteln (20) zugewandte weitere Fresnel-Struktur bilden, welche insbesondere in einer Projektion senkrecht zur Ebene (E3) des Kollimators (40) den zentralen Bereich (42) ringartig umgibt.

13. Medizinische Leuchte nach einem der vorherigen Ansprüche,
**dadurch gekennzeichnet,**
**dass** die optischen Mittel (30) derart ausgeführt sind, dass das Lichtfeld (200), welches senkrecht zur optischen Achse (A) der Leuchte (100) auf die Objektebene (O) projiziert ist, eine größere Ausweitung entlang einer senkrecht zur Richtung der asymmetrischen Aufweitung verlaufenden Achse (O2) aufweist als entlang einer parallel zur Richtung der asymmetrischen Aufweitung verlaufenden Achse (O1).

14. Medizinische Leuchte nach einem der vorherigen Ansprüche,
**dadurch gekennzeichnet,**
**dass** zumindest einige der die Linsenstruktur bildenden Linsen (53, 58) bezüglich der Ebene (E3) des Kollimators um eine Achse gekippt sind, welche im Wesentlichen senkrecht zur Richtung der asymmetrischen Aufweitung ausgerichtet ist.

15. Medizinische Leuchte nach einem der vorherigen Ansprüche,
**dadurch gekennzeichnet,**
**dass** die Linsenstruktur der Abdeckscheibe (50) einen inneren Bereich (52) sowie einen äußeren Bereich (56) aufweist, wobei
• Linsen (53) des inneren Bereichs (52) dazu ausgebildet sind, das von dem zentralen Bereich (42) des Kollimators (40) abgegebene Licht in Form eines zentralen Lichtfelds auf die Objektebene (O) zu projizieren und
• Linsen (58) des äußeren Bereichs (56) dazu ausgebildet sind, das von dem äußeren Bereich (46) des Kollimators (40) abgegebene Licht in Form eines äußeren Lichtfelds auf die Objektebene (O) zu projizieren,
und wobei sich zentrales Lichtfeld und äußeres Lichtfeld im Wesentlichen vollständig überlagern,
wobei vorzugsweise jede Einzellinse (53, 58) des inneren oder äußeren Bereichs (52, 56) jeweils vollständig das entsprechende zentrale bzw. äußere Lichtfeld projiziert, und
wobei besonders bevorzugt die Linsen (53) des inneren Bereichs (52) im Wesentlichen quadratisch sind und die Linsen (58) des äußeren Bereichs (56) in Richtung einer Achse (I2) des Kollimators (40), welche senkrecht zur Richtung der asymmetrischen Aufweitung verläuft, eine größere Erstreckung aufweisen als in einer parallel zur Richtung der asymmetrischen Aufweitung verlaufenden Achse (I1) des Kollimators (40).

## Claims

1. Medical lamp (100), in particular dental treatment lamp for the intraoral illumination of an operation field, having at least one illumination unit (10) having lighting means (20) and optical means (30) for generating a light field (200) in an object plane (O),
wherein the lighting means (20) have a first, substantially punctiform LED light source (21) and the optical means (30) have a plate-shaped collimator (40) and a cover pane (50),
wherein the collimator (40) has a central area (42), which is provided with light-refracting structures (43) on a side facing away from the lighting means (20), and an outer area (46), which surrounds the central area (42) and which is provided with structures (48) designed for total-internal reflection on a side facing towards the lighting means (20),
and wherein the cover pane (50) is provided with a lens structure, which has a plurality of individual lenses each designed to project the light from the first LED light source (21) emitted by the collimator (40) and entering the lenses onto the object plane in order to generate the light field (200),
**characterized**
**in that** the lighting means (20) comprise at least one second LED light source (25), which is positioned in such a way that the light coming from the at least one second LED light source (25) is radiated via the collimator (40) and the cover pane (50) into an angular area greater than the angular area under which the first light source (21) generates the light field (200).

2. Medical lamp according to Claim 1,
**characterized**
**in that** an optical centre in which the first LED light source (21) is positioned is defined by the collimator (40), wherein the at least one second LED light source (25) is arranged outside the optical centre.

3. Medical lamp according to Claim 2,
**characterized**
**in that** the at least one second LED light source (25) is positioned axially offset from the first LED light source (21) such that the radiated light is incident on the outer area (46) of the collimator (40) at an angle so that substantially no total-internal reflection occurs at the formed structures (48).

4. Medical lamp according to Claim 2 or 3, **characterized**
**in that** the at least one second LED light source (25) is offset by approx. 10 mm to 40 mm from the first LED light source (21).

5. Medical lamp according to any of the preceding claims,
**characterized**
**in that** the at least one second LED light source (25) has several LEDs or LED clusters, which are arranged in a distributed manner, preferably in an evenly distributed manner, around the first LED light source (21).

6. Medical lamp according to any of the preceding claims,
**characterized**
**in that** the first LED light source (21) and the at least one second LED light source (25) are arranged in a common plane, preferably on a common carrier element (22), wherein the distance between the plane in which the LED light sources (21, 25) are arranged and the plane of the collimator (40) is approximately 40 mm to 60 mm.

7. Medical lamp according to any of the preceding claims,
**characterized**
**in that** the at least one second LED light source (25) is assigned a diffuser (27) which influences the light of the at least one second LED light source (25) before the light enters the collimator (40).

8. Medical lamp according to any of the preceding claims,
**characterized**
**in that** the at least one second LED light source (25) is designed to emit light with a colour or colour temperature that differs from the light of the first LED light source (21), wherein preferably the colour or colour temperature of the light emitted by the at least second LED light source (25) is changeable.

9. Medical lamp according to any of the preceding claims,
**characterized**
**in that** the rear side of the central area (42) of the collimator (40) facing towards the lighting means (20) is provided with partial surfaces (45, 145), which have an inclination in relation to a plane (E3) of the collimator (40) and thus in relation to the object plane (O) in order to asymmetrically expand the light field (200) in one direction.

10. Medical lamp according to Claim 9,
**characterized**
**in that** at least some of the partial surfaces (45, 145), preferably all of them, are each tilted around an axis which lies in the plane (E3) of the collimator (40) and is substantially perpendicular to the direction of the asymmetrical expansion.

11. Medical lamp according to Claim 9,
**characterized**
**in that** the partial surfaces (145) are formed strip-shaped and each extend substantially perpendicular to the direction of the asymmetrical expansion along their respective tilt axis,
wherein preferably the strip-shaped surface areas (145) are concavely curved with respect to the direction of the asymmetrical expansion and
particularly preferably the strip-shaped surface areas (145) are each formed symmetrically with respect to a plane (E1), which is perpendicular to the plane (E3) of the collimator (40) and is spanned by an axis (I1) extending parallel to the direction of the asymmetrical expansion.

12. Medical lamp according to any of the preceding claims,
**characterized**
**in that** the light-refracting structures (43) of the central area (42) of the collimator (40) form a Fresnel structure,
wherein preferably the structures (48) of the collimator (40) designed for total-internal reflection form a further Fresnel structure facing towards the lighting means (20), which in particular encloses the central area (42) like a ring in a projection perpendicular to the plane (E3) of the collimator (40).

13. Medical lamp according to any of the preceding claims,
**characterized**
**in that** the optical means (30) are constructed such that the light field (200), which is projected perpendicular to the optical axis (A) of the lamp (100) on the object plane (O), has a greater expansion along an axis (O2) extending perpendicular to the direction of the asymmetrical expansion than along an axis (O1) extending parallel to the direction of the asymmetrical expansion.

14. Medical lamp according to any of the preceding claims,
**characterized**
**in that** at least some of the lenses (53, 58) forming the lens structure are tilted with respect to the plane (E3) of the collimator around an axis which is aligned substantially perpendicular to the direction of the asymmetrical expansion.

15. Medical lamp according to any of the preceding claims,
**characterized**
**in that** the lens structure of the cover pane (50) has an inner area (52) and an outer area (56), wherein
• lenses (53) of the inner area (52) are designed to project the light emitted by the central area (42) of the collimator (40) in the form of a central light field on the object plane (O) and
• lenses (58) of the outer area (56) are designed to project the light emitted by the outer area (46) of the collimator (40) in the form of an outer light field on the object plane (O),
and wherein central light field and outer light field are substantially completely superimposed,
wherein preferably each individual lens (53, 58) of the inner or outer area (52, 56) completely projects the corresponding central or outer light field, respectively, and
wherein particularly preferably the lenses (53) of the inner area (52) are substantially square and the lenses (58) of the outer area (56) have a greater extension in the direction of an axis (I2) of the collimator (40), which extends perpendicular to the direction of the asymmetrical expansion, than in an axis (I1) of the collimator (40) extending parallel to the direction of the asymmetrical expansion.

## Revendications

1. Lampe médicale (100), en particulier lampe de traitement dentaire pour l'éclairage intra-buccal d'un champ opératoire, comportant au moins une unité d'éclairage (10) équipée de moyens d'éclairage (20) et de moyens optiques (30) pour générer un champ lumineux (200) dans un plan objet (O),
les moyens d'éclairage (20) comportant une première source de lumière à DEL (21) sensiblement ponctuelle et les moyens optiques (30) comportant un collimateur en forme de plaque (40) ainsi qu'une plaque de recouvrement (50),
le collimateur (40) comportant une zone centrale (42) qui est pourvue, sur un côté opposé aux moyens d'éclairage (20), de structures (43) réfractant la lumière, ainsi qu'une zone extérieure (46) entourant la zone centrale (42), qui est pourvue, sur un côté tourné vers les moyens d'éclairage (20), de structures (48) conçues pour la réflexion interne totale ,
et la plaque de recouvrement (50) étant pourvue d'une structure de lentilles qui comporte une pluralité de lentilles individuelles conçues pour projeter la lumière de la première source de lumière à DEL (21) émise par le collimateur (40) et entrant dans les lentilles respectivement sur le plan objet pour générer le champ lumineux (200),
**caractérisée en ce**
**que** les moyens d'éclairage (20) comprennent au moins une deuxième source de lumière à DEL (25), qui est positionnée de telle manière que la lumière provenant de l'au moins une deuxième source de lumière à DEL (25) est diffusée par le collimateur (40) et de la plaque de recouvrement (50) dans une plage angulaire qui est supérieure à la plage angulaire dans laquelle la première source de lumière (21) génère le champ lumineux (200).

2. Lampe médicale selon la revendication 1, **caractérisée en ce**
**que** le collimateur (40) définit un centre optique dans lequel est positionnée la première source de lumière à DEL (21), l'au moins une deuxième source de lumière à DEL (25) étant disposée à l'extérieur du centre optique.

3. Lampe médicale selon la revendication 2, **caractérisée en ce**
**que** l'au moins une deuxième source de lumière à DEL (25) est décalée axialement par rapport à la première source de lumière à DEL (21) de telle manière que la lumière diffusée est incidente de manière angulaire sur la zone extérieure (46) du collimateur (40), de telle sorte que sensiblement aucune réflexion totale ne se produit sur les structures (48) formées.

4. Lampe médicale selon la revendication 2 ou 3, **caractérisée en ce**
**que** l'au moins une deuxième source de lumière à DEL (25) est décalée d'environ 10 mm à 40 mm par rapport à la première source de lumière à DEL (21).

5. Lampe médicale selon l'une des revendications précédentes,
**caractérisée en ce**
**que** l'au moins une deuxième source de lumière à DEL (25) comporte plusieurs DEL ou grappes de DEL qui sont réparties, de préférence sont réparties uniformément, autour de la première source de lumière à DEL (21).

6. Lampe médicale selon l'une des revendications précédentes,
**caractérisée en ce**
**que** la première source de lumière à DEL (21) et l'au moins une deuxième source de lumière à DEL (25) sont disposées dans un plan commun, de préférence sur un élément de support commun (22),
la distance entre le plan, dans lequel sont disposées les sources de lumière à DEL (21, 25), et le plan du collimateur (40) allant d'environ 40 mm à 60 mm.

7. Lampe médicale selon l'une des revendications précédentes,
**caractérisée en ce**
**qu'**un diffuseur (27) est associé à l'au moins une deuxième source de lumière à DEL (25), lequel influence la lumière de l'au moins une deuxième source de lumière à DEL (25) avant qu'elle n'entre dans le collimateur (40).

8. Lampe médicale selon l'une des revendications précédentes,
**caractérisée en ce**
**que** l'au moins une deuxième source de lumière à DEL (25) est conçue pour émettre de la lumière avec une couleur ou une température de couleur s'écartant de la lumière de la première source de lumière à DEL (21), la couleur ou la température de couleur de la lumière émise par l'au moins une deuxième source de lumière à DEL (25) pouvant de préférence varier.

9. Lampe médicale selon l'une des revendications précédentes,
**caractérisée en ce**
**que** la face arrière de la zone centrale (42) du collimateur (40) tournée vers les moyens d'éclairage (20) est pourvue de surfaces partielles (45, 145), qui présentent une inclinaison par rapport à un plan (E3) du collimateur (40) et donc par rapport au plan objet (O) pour élargir le champ lumineux (200) de manière asymétrique dans une direction.

10. Lampe médicale selon la revendication 9, **caractérisée en ce**
**qu'**au moins certaines des surfaces partielles (45, 145), de préférence toutes, sont inclinées chacune autour d'un axe qui se trouve dans le plan (E3) du collimateur (40) et qui est sensiblement perpendiculaire à la direction de l'élargissement asymétrique.

11. Lampe médicale selon la revendication 9, **caractérisée en ce**
**que** les surfaces partielles (145) sont réalisées en forme de bande et s'étendent chacune sensiblement perpendiculairement à la direction de l'élargissement asymétrique le long de leur axe d'inclinaison respectif, les zones de surface (145) en forme de bande étant de préférence bombées de manière concave par rapport à la direction de l'élargissement asymétrique et
les zones de surface (145) en forme de bande étant de manière particulièrement préférée symétriques par rapport à un plan (E1), qui est perpendiculaire au plan (E3) du collimateur (40) et qui est défini par un axe (I1) s'étendant parallèlement à la direction de l'élargissement asymétrique.

12. Lampe médicale selon l'une des revendications précédentes,
**caractérisée en ce**
**que** les structures (43) réfractant la lumière de la zone centrale (42) du collimateur (40) forment une structure de Fresnel,
les structures (48) du collimateur (40) conçues pour la réflexion totale formant de préférence une autre structure de Fresnel tournée vers les moyens d'éclairage (20), qui entoure la zone centrale (42) en forme d'anneau en particulier dans une projection perpendiculairement au plan (E3) du collimateur (40).

13. Lampe médicale selon l'une des revendications précédentes,
**caractérisée en ce**
**que** les moyens optiques (30) sont conçus de telle manière que le champ lumineux (200), qui est projeté sur le plan objet (O) perpendiculairement à l'axe optique (A) de la lampe (100), présente une plus grande extension le long d'un axe (O2) perpendiculaire à la direction de l'élargissement asymétrique que le long d'un axe (O1) parallèle à la direction de l'élargissement asymétrique.

14. Lampe médicale selon l'une des revendications précédentes,
**caractérisée en ce**
**qu'**au moins certaines des lentilles (53, 58) formant la structure de lentilles sont inclinées par rapport au plan (E3) du collimateur autour d'un axe, qui est orienté sensiblement perpendiculairement à la direction de l'élargissement asymétrique.

15. Lampe médicale selon l'une des revendications précédentes,
**caractérisée en ce**
**que** la structure de lentilles de la plaque de recouvrement (50) comporte une zone intérieure (52) ainsi qu'une zone extérieure (56),
• des lentilles (53) de la zone intérieure (52) étant conçues pour projeter la lumière émise par la zone centrale (42) du collimateur (40) sur le plan objet (O) sous la forme d'un champ lumineux central et
• des lentilles (58) de la zone extérieure (56) étant conçues pour projeter la lumière émise par la zone extérieure (46) du collimateur (40) sur le plan objet (O) sous la forme d'un champ lumineux extérieur,
et le champ lumineux central et le champ lumineux extérieur se superposant sensiblement complètement, chaque lentille individuelle (53, 58) de la zone intérieure ou extérieure (52, 56) projetant de préférence entièrement le champ lumineux central ou extérieur correspondant, et
de manière particulièrement préférée, les lentilles (53) de la zone intérieure (52) étant sensiblement carrées et les lentilles (58) de la zone extérieure (56) présentant, dans la direction d'un axe (I2) du collimateur (40), qui est perpendiculaire à la direction de l'élargissement asymétrique, une plus grande extension que dans un axe (I1) du collimateur (40) parallèle à la direction de l'élargissement asymétrique.
